# EUROPEAN PATENT SPECIFICATION

(11) **EP 0 786 172 B1**
(45) Date of publication and mention of the grant of the patent: **27.11.2002**
(21) Application number: 96918807.7
(22) Date of filing: 08.07.1996
(51) Int. Cl.: H04B 1/66, H04H 5/00

(54) **TRANSMISSION SYSTEM, TRANSMITTER, RECEIVER AND TRANSMISSION METHOD**
ÜBERTRAGUNGSEINRICHTUNG, SENDER, EMPFÄNGER UND ÜBERTRAGUNGSVERFAHREN
SYSTEME DE TRANSMISSION, EMETTEUR, RECEPTEUR ET PROCEDE DE TRANSMISSION

(30) Priority: 13.07.1995 EP 95201926
(43) Date of publication of application: 30.07.1997
(73) Proprietor: Koninklijke Philips Electronics N.V., 5621 BA Eindhoven (NL)
(72) Inventor: XIAO, Qun, B-3001 Leuven/Haasrode (BE)
(74) Representative: Mak, Theodorus Nicolaas
(86) International application number: IB9600654
(87) International publication number: WO97003502

(56) References cited:
- EP-A- 0 115 319
- EP-A- 0 608 930
- DE-A- 4 319 217

## Description

The present invention relates to a transmission system comprising a transmitter with an encoding device for encoding an analog source signal into an equivalent analog signal, the system further comprising a receiver with a decoding device for decoding the equivalent analog signal into a reconstructed analog signal, and a transmission medium for conveying the equivalent analog signal to the receiver, the encoding device comprising digitizing means for digitizing the analog signal into a digital signal, and decomposition means for decomposing the digital signal into the equivalent analog signal, whereby the equivalent analog signal comprises equivalent analog signal components representing respective bit groups of the digital signal.

The present invention further relates to a transmitter and to a receiver for a transmission system, to an equivalent analog signal, and to a transmission method.

A transmission system of the above kind is known from the European patent application No. 0 115 319. In EP 0 115 319 a system for transmission of analog signals, e.g. audio or video signals, is described in which an analog source signal to be transmitted is sampled by means of an analog-to-digital converter. From a digital output signal of the analog-to-digital converter bit groups are formed. These bit groups are fed to a multiplexer that supplies the respective bit groups to an digital-to-analog converter. Herewith the bit groups provide a series of PAM-signals that represent the analog source signal. The series of PAM-signals is decoded by means of a reverse process so as to obtain a reconstructed analog signal. Although in view of still prior systems such a system achieves a bandwidth reduction, the total bandwidth to transmit an analog signal is still considerable, e.g. with three sub-samples as described in an embodiment, the transmission bandwidth is greater than six times the bandwidth of the analog source signal, e.g. an audio signal. Besides, because of applying time division multiplexing of the sub-samples, both frame synchronisation at encoding and decoding side is needed, as well as symbol synchronisation.

It is an object of the present invention to provide a transmission system of the above kind with reduced system complexity and with a still further reduced bandwidth.

To this end the transmission system according to the present invention characterized in in that the transmission medium comprises parallel transmission channels for separate transmission of the equivalent analog signal components, and in that the decoding device is arranged for reconstructing the reconstructed analog signal from parallel received equivalent analog signal components and that a first bit group of the respective bit groups representing a least significant bit group is scaled up and that a second bit group of the respective bit groups representing a most significant bit group is scaled down.

It is achieved that a very high dynamic range signal such as a CD quality signal can be transmitted by means of an analog channel of less quality. The present invention is based upon the insight of having a tradeoff between the necessary transmission bandwidth and an error tolerance of the system, more significant bits being scaled down so as to fit into the lesser quality channel, and less significant bits being scaled up so as to fully occupy the lesser quality channel.

In an embodiment of a transmission system according to the present invention, for the purpose of channel alignment at the side of the receiver, the transmitter comprises a pattern generator for generating an alignment pattern which is conveyed at given instants to the receiver instead of the digital signal. Herewith, a possible amplitude and/or phase mismatch of the parallel channels, e.g. due to different propagation times, can be aligned. Under practical circumstances, with slowly varying propagation conditions, such an alignment can be a long term calibration of the channels.

In a further embodiment of a transmission system according to the present invention, the transmitter is further provided with a signal pause detector for detecting signal pauses of the analog source signal, and the transmitter is arranged to select the given instants of time on the basis of a mode selection signal generated by the signal pause detector. It is achieved that the calibration of the channels can be done during signal pauses. The mode selection signal is transmitted to the decoding device.

In an embodiment of the transmission system, the analog input signal is a stereo signal of which respective left and right channels are divided over three analog transmission channels, two of them conveying scaled up equivalent analog signals corresponding to less significant bit groups of the respective sampled left and right channels, and one of them conveying similar equivalent analog signals corresponding to more significant bit groups of the sampled left and right channel.

In a still further embodiment of the transmission system according to the present invention, the transmission medium is wireless.

The present invention will now be described, by way of example, with reference to the accompanying drawings, wherein
Fig. 1 schematically shows a digital transmission system according to the present invention,
Fig. 2 shows a transmitter with an encoding device according to the present invention,
Fig. 3 shows another embodiment of a transmitter according to the present invention,
Fig. 4 shows scaling up and scaling down in more detail as a function of time,
Fig. 5 shows the use of three parallel channels for conveying a left and a right channel of a stereo signal according to the present invention,
Fig. 6 shows transmission of control information in a transmitter according to the present invention,
Fig. 7 shows a receiver with a decoding device according to the present invention, and
Fig. 8 shows processing of training sequences in a receiver according to the present invention.

Throughout the figures the same reference numerals are used for the same features.

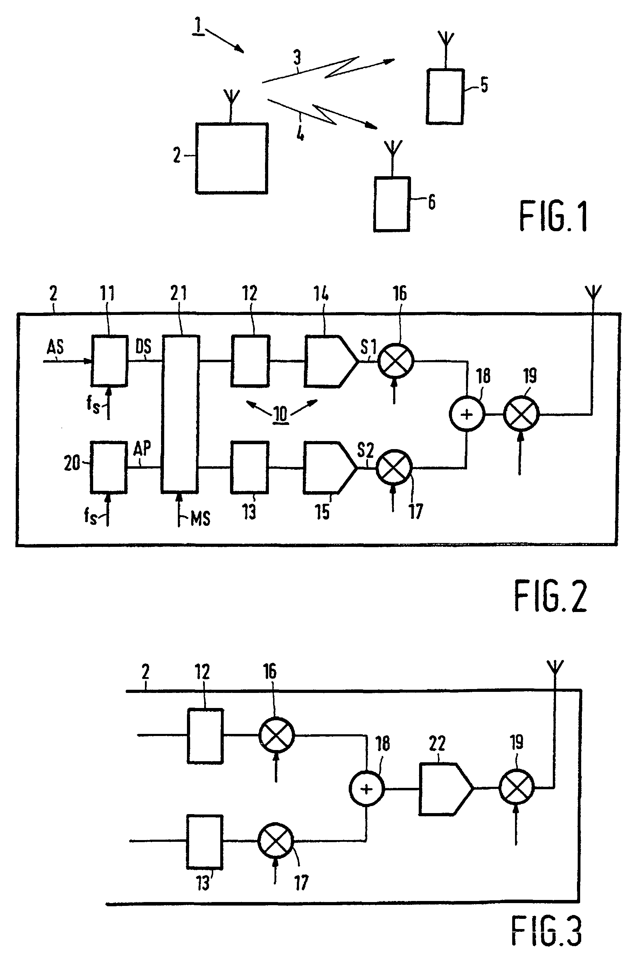

Fig. 1 schematically shows a transmission system 1 according to the present invention, comprising a transmitter 2 for transmitting wireless signals 3 and 4 to respective receivers 5 and 6. The wireless signals 3 and 4 can be carrier modulated audio or video signals, or any other suitable signal within the framework of the present invention. In case of audio signals, these signals can be CD-quality signals. Instead of a wireless transmission, such as transmission from a stereo set to wireless speaker sets, the transmission can be wire-bound such as in a cable network. For bi-directional communication, the transmitter 2, and the receivers 5 and 6 can also be transceivers. Any suitable carrier modulation technique can be applied, such as FM or AM. In case of cable transmission, the respective transmission channels can be formed of a baseband channel and a number of low frequency subcarrier channels.

Fig. 2 shows the transmitter 2 with an encoding device 10 according to the present invention for encoding an analog source signal AS. The encoding device comprises an analog-to-digital converter 11, e.g. a 16 bits converter, for digitizing the analog source signal into a digital signal DS, the analog-to-digital converter 11 being clocked by a sampling clock signal fₛ, and further decomposition means for decomposing the digital signal into an equivalent analog signal with equivalent analog signal components S1 and S2. The decomposition means comprises a shift register 12, e.g. 16 bits, for scaling up less significant bits of the digital signal DS, e.g. the eleven least significant bits of the digital signal DS, and a shift register 13, e.g. 16 bits, for scaling down more significant bits of the digital signal DS, e.g. the five most significant bits of the digital signal DS. In fact, scaling up is done by shifting the eleven least significant bits of the digital signal to the most significant bit positions of the shift register 12, and zero-filling the remaining bit positions. The full scale of the scaled up signal is designed and calibrated to be just at the clipping level of the analog channel through which the signal is conveyed. Scaling down is done by directly feeding through the five most significant bits of the digital signal to the most significant bit positions of the shift register 13, and zero-filling the remaining bit positions. In a practical situation, the shift register 13 can then be dispensed with. The full scale of the scaled down signal is designed and calibrated to be just at the clipping level of the analog channel through which the signal is conveyed, i.e. the scaling down process is done implicitly.

The decomposition means further comprises respective digital-to-analog converters 14 and 15 for getting the equivalent analog signal components S1 and S2 from the scaled up and scaled down signals. Reference signals (not shown) of the digital-to-analog converters 14 and 15 are chosen such that just no signal clipping occurs at maximum input signals to the respective converters 14 and 15. Herewith, the full swing of both channels is used without signal clipping, and with an optimal signal-to-noise ratio. In the example given, the digital-to-analog converters 14 and 15 should be at least twelve bit types, but in practical situations, the more readily available sixteen bit types are applied, a sixteen bit type being amass volume type, and thus cheaper. In case of CD quality signals, the full swing of the analog source signal could be 96 dB, whereas the respective analog channels have only a 70 dB signal-to-noise ratio. The transmitter 2 further comprises FM modulators 16 and 17 for modulating the signals S1 and S2. The modulated signal S1 can be a baseband signal, and the modulated signal S2 can be a sub-channel signal, e.g. at 38 kHz. The modulated signals S1 and S2 are combined in a combiner 18. In case of wireless transmission, the transmitter 2 further comprises a carrier modulator 19, modulating the combined signal to a radio wave carrier, e.g. 430 MHz or 910 MHz. The transmitter 2 is further provided with a pattern generator 20 for generating an alignment pattern AP for channel amplitude and/or phase alignment at the side of the receivers 5 and 6. The alignment pattern AP can be transmitted to the receivers 5 and 6 at a very low data rate, each during longer signal pauses of the analog source signal AS. To this end the transmitter 2 comprises a multiplexer 21 controlled by a mode selection signal MS, e.g. via a low data rate sub-channel.

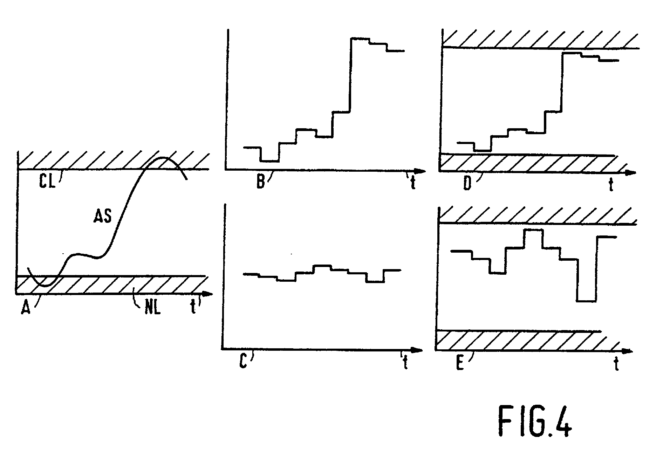

Fig. 3 shows another embodiment of the transmitter 2 according to the present invention. In this embodiment, a single, fast digital-to-analog converter 22 is provided after the combiner 18, the analog-to-digital converters 14 and 15 being dispensed with. Then, all circuitry up to and including the combiner 18 is digital.

Fig. 4 shows scaling up and scaling down in more detail as a function of time t. The hatched areas show a respective clipping level CL and a noise level NL of an analog FM transmission channel, e.g. having a 70 dB signal-to-noise ratio. A CD quality signal AS of 96 dB dynamic range cannot go through such a channel without quality loss. In graph A such a situation is shown. Graph B shows the five most significant bits of the digital signal DS, and graph C the eleven least significant bits of the digital signal DS. As described before, the five most significant bits of the digital signal DS are scaled down, and the eleven least significant bits of the digital signal DS are scaled up such that the bit groups are optimally transmitted- through the respective channels. Because of the fact that the first channel only conveys a very roughly quantisized version of the analog source signal, though scaled down, a very robust signal behaviour is achieved, i.e. the transmission channel noise of this channel becomes negligible. Because of the scaling up of the least significant eleven bits also the scaled up signal has a robust signal behaviour as to transmission channel noise. At the receiver side, reverse steps are carried out to reconstruct the analog source signal. Herewith, the transmission channel noise is cancelled to a great extent.

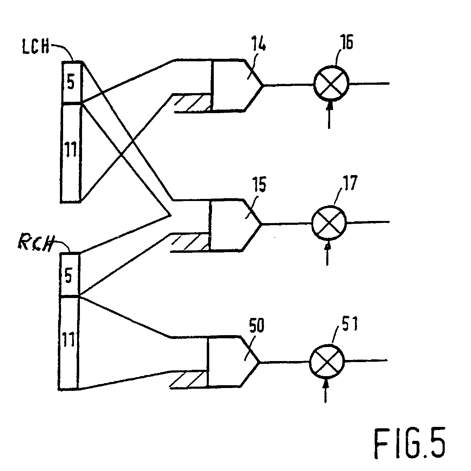

Fig. 5 shows the use of three parallel channels for conveying a left LCH and a right channel RCH of a stereo signal AS according to the present invention. As before, the left sampled stereo channel is decomposed to the digital-to-analog converters 14 and 15, and, as far as the five most significant bits are concerned, the right sampled stereo channel is decomposed to the digital-to-analog converter 15, and, for the eleven least significant bits, to an analog-to-digital converter 50. Zero-filling as described is schematically indicated with hatched areas. An output of the digital-to-analog converter 50 is fed to an FM modulator 51 modulating the converted and scaled up eleven bits bit group of the right stereo channel to a further sub-channel. In the present case, a baseband channel can be used for the eleven least significant bits of the left stereo channel, a 38 kHz sub-channel for the five most significant bits of the respective left and the right stereo channels, and a 76 kHz sub-channel for the eleven least significant bits of the right stereo channel. These modulated signals are fed to the combiner 18. Herewith, the transmission bandwidth for a stereo audio signal according to the present invention is only 50% above a broadcast stereo FM signal.

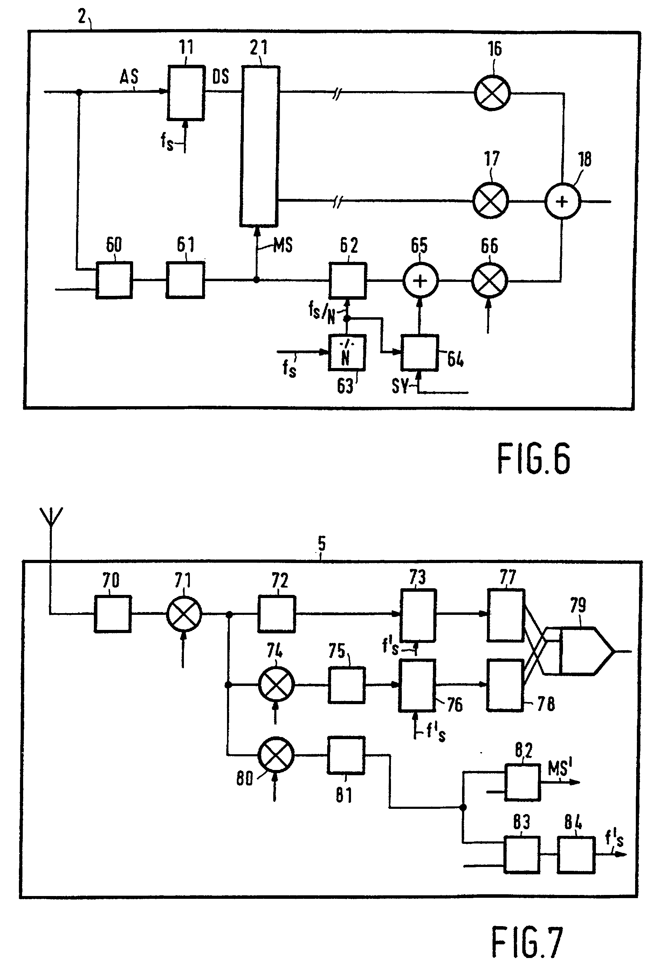

Fig. 6 shows transmission of control information in the transmitter 2 according to the present invention. The mode selection signal MS is generated by a signal pause detector formed by a comparator with hysteresis 60 coupled to a lowpass filter 61. Herewith, signal pauses of a predetermined longer duration are detected. The mode selection signal MS is transmitted to the receivers 5 and 6 via a low data rate control channel. To this end the mode selection signal MS triggers a pattern generator 62 which is clocked by a clock signal fₛ/N, N being an integer. The clock signal fₛ/N is formed by dividing the clock signal fₛ in a divider 63. Other control signals are formed similarly. For symbol synchronisation, the divided clock signal fₛ/N is also transmitted to the receivers 5 and 6 via the control channel as a unique pattern generated by means of a pattern generator 64 controlled by a signal SY. The control signals are combined in a combiner 65 and fed to a modulator 66, an output signal of which is fed to the combiner 18. The control channel is a sub-channel, e.g. at 100 kHz.

Fig. 7 shows the receiver 5 with a decoding device according to the present invention. The receiver 5 comprises a receiver front-end 70 which is coupled to a carrier demodulator 71 at an output of which parallel received equivalent analog signal components of the transmitted analog source signal are available at subcarriers. In case of a sixteen bit equivalent signal as transmitted via two parallel channels, the receiver comprises two detection branches, a baseband detector comprising a bandfilter 72 coupled to an analog-to-digital converter 73 providing a least significant bit group of eleven bits, and a sub-channel detector comprising a demodulator 74 and a filter 75 coupled to an analog-to-digital converter 76 providing a most significant bit group of five bits. The analog-to-digital converters 73 and 76 can be sixteen bit converters. Reverse operations as scaling up and/or scaling down being done by means of respective shift registers 77 and 78. The so reconstructed bit groups representing the analog source signal in the transmitter 2 are fed to a digital-to-analog converter 79 at an output of which a reconstructed analog signal is available, the least significant reconstructed bit group having been shifted to the least significant bit positions of the digital-to-analog-converter 79, and, in the given example, the most significant reconstructed bit group having been directly fed to the most significant bit positions of the digital-to-analog-converter 79. The receiver 5 further comprises means for detecting received control signals via a low bit rate sub-channel. These means comprises a demodulator 80, a filter 81, and pattern comparators 82 and 83. The pattern comparator 82 provides a detected mode selection pulse MS', and the pattern comparator 83 provides a sync pulse for controlling a phase lock loop circuit 84. The phase lock loop circuit 84 provides a recovered clock signal fₛ' for controlling the analog-to-digital converters 73 and 76.

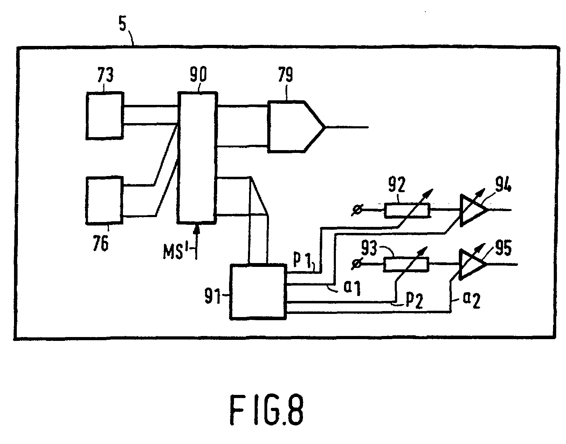

Fig. 8 shows processing of training sequences in the receiver 5 according to the present invention. The receiver comprises a demultiplexer 90 at input side coupled to the analog-to-digital converters 73 and 76, an at output side to the digital-to-analog converter 79, and to a training sequence processor 91. Under control of the detected mode selection signal MS', the demultiplexer 90 couples the analog-to-digital converters 73 and 76 to either the digital-to-analog converter 79 or to the training sequence processor 91. In a training mode, the training sequence processor 91 evaluates the received digital training sequence as received via two parallel channels, and generates amplitude and/or phase control signals a1, a2, and p1, p2 for the two channels. In the respective reception branches, the receiver 2 comprises adjustable phase delays 92 and 93, and adjustable amplifiers 94 and 95, controlled by the phase control signals p1 and p2, and by the amplitude control signals a1 and a2, respectively.

In the foregoing an example of scaling up or down of equivalent analog signals in the transmitter 2 has been given. For practical reasons, either one of scaling up or scaling down is done in the digital domain, as described. The full scale of the digital-to-analog converter 15 for the most significant bit group of the digital signal DS can be calibrated to the clipping level of the relevant transmission channel, e.g. by choosing a proper modulation index of the FM modulator 17. Then, no scaling down in the digital domain has to be done explicitly for the most significant bit group, but only scaling up in the digital domain of the least significant bit group so as to avoid drowning in noise of the relevant transmission channel. Similarly, the smallest signal of the digital-to-analog converter 14 for the least significant bit group of the signal DS can be adjusted such that it is above the noise level of the relevant transmission channel, e.g. by choosing a proper modulation index of the FM modulator 16. Then, there is no need for scaling up of the least significant bit group in the digital domain because this has already been carried out implicitly by analog means, but the most significant bit group has to be scaled down in the digital domain so as to avoid clipping in its relevant transmission channel. Although both scaling up and down can be done in the digital domain, this solution is less efficient because more hardware is needed then.

## Claims

1. A transmission system (1) comprising a transmitter (2) with an encoding device (11, 21) for encoding an analog source signal into an equivalent analog signal, the system further comprising a receiver (5, 6) with a decoding device (77, 78, 79) for decoding the equivalent analog signal into a reconstructed analog signal, and a transmission medium for conveying the equivalent analog signal (3, 4) to the receiver (5, 6), the encoding device (11, 21) comprising digitizing means (11) for digitizing the analog signal into a digital signal, and decomposition means (21) for decomposing the digital signal into the equivalent analog signal, whereby the equivalent analog signal comprises equivalent analog signal components representing respective bit groups of the digital signal, **characterized in that** the transmission medium comprises parallel transmission channels for separate transmission of the equivalent analog signal components, and **in that** the decoding device (77, 78, 79) is arranged for reconstructing the reconstructed analog signal from parallel received equivalent analog signal components and that a first bit group of the respective bit groups representing a least significant bit group is scaled up and that a second bit group of the respective bit groups representing a most significant bit group is scaled down.

2. A transmission system (1) according to claim 1, wherein, for the purpose of channel alignment at the side of the receiver (5, 6), the transmitter (2) comprises a pattern generator (20) for generating an alignment pattern which is conveyed at given instants to the receiver (5, 6) instead of the digital signal.

3. A transmission system (1) according to claim 2, wherein the transmitter (2) is further provided with a signal pause detector for detecting signal pauses of the analog source signal, and the transmitter (2) is arranged to select the given instants of time on the basis of a mode selection signal generated by the signal pause detector.

4. A transmission system (1) according to claim 3, wherein the transmitter (2) is arranged to transmit the mode selection signal to the receiver (5, 6) so that the receiver (5, 6) can set itself to a source signal decoding mode or to a pattern alignment mode.

5. A transmission system (1) according to claim 1, 2, 3, or 4, wherein the decoding device (77, 78, 79) comprises at least two parallel operating decoding means (77, 78) for reconstructing respective bit groups from the parallel received equivalent analog signal components, and combining and converting means for combining the reconstructed bit groups and for converting the combined reconstructed bit groups to the reconstructed analog signal.

6. A transmission system (1) according to any one of the claims 1 to 5, wherein the analog source signal is a stereo audio signal, and three parallel transmission channels are used for conveying the equivalent analog signal, a first channel conveying an equivalent analog signal component corresponding to a first bit group of a left stereo channel LCH of the stereo signal, a second channel conveying an equivalent analog signal component corresponding to a first bit group of a right stereo channel RCH, and a third channel conveying respective equivalent analog signal components corresponding to respective second bit groups of the left LCH and right RCH stereo channels.

7. A transmission system (1) according to any one of the claims 1 to 6, wherein the transmission medium is wireless.

8. A transmitter (2) with an encoding device (11,21) for a transmission system (1), which encoding device (11, 21) comprises digitizing means (11) for digitizing an analog signal into a digital signal, and decomposition means (21) for decomposing the digital signal into an equivalent analog signal, whereby the equivalent analog signal comprises equivalent analog signal components representing respective bit groups of the digital signal, **characterized in that** the transmitter (2) comprises means for parallel transmission of the respective equivalent analog signal components to a parallel operating decoding device (77, 78, 79) via a transmission medium and that a first bit group of the respective bit groups representing a least significant bit group is scaled up and that a second bit group of the respective bit groups representing a most significant bit group is scaled down..

9. A receiver (5,6) with a decoding device (77, 78, 79) for a transmission system (1), **characterized in that** the decoding device (77, 78, 79) comprises at least two parallel operating decoding means (77, 78) for reconstructing respective bit groups from parallel equivalent analog signal components received from a transmitter (2) via a transmission medium where a first bit group of the respective bit groups representing a least significant bit group is scaled down and a second bit group of the respective bit groups representing a most significant bit group is scaled up, whereby the equivalent analog signal components represent an analog source signal to be fed to an encoding device (11, 21) within the transmitter, and **in that** the decoding device (77, 78, 79) comprises combining and converting (79) means for combining the reconstructed bit groups and for converting the combined reconstructed bit groups to a reconstructed analog signal.

10. A transmission method for transmitting an equivalent analog signal in a transmission system (1) via a transmission medium, the method comprising the following steps:
a) encoding an analog source signal into an equivalent analog signal,
b) after conveying, decoding of the equivalent analog signal into a reconstructed analog signal,
c) when encoding, forming of a digital signal from the analog source signal, and decomposing the digital signal into the equivalent signal, whereby the equivalent analog signal comprises equivalent analog signal components representing respective bit groups of the digital signal,
**characterized in that**
d) the equivalent analog signal components are transmitted to a parallel operating decoding means via respective separate transmission channels, and
e) the reconstructed analog signal is formed from parallel received equivalent analog signal components.
f) a first bit group of the respective bit groups representing a least significant bit group is scaled up and that a second bit group of the respsective bit groups representing a most significant bit group is scaled down.

## Patentansprüche

1. Übertragungssystem (1) mit einem Sender (2) mit einer Codieranordnung (11, 21) zum Codieren eines analogen Quellensignals in ein äquivalentes analoges Signal, wobei das System weiterhin einen Empfänger (5, 6) mit einer Decodieranordnung (77, 78, 79) aufweist zum Decodieren des äquivalenten analogen Signals in ein rekonstruiertes analoges Signal, und ein Übertragungsmedium zum Transportieren des äquivalenten analogen Signals (3, 4) zu dem Empfänger (5, 6), wobei die Codieranordnung (11, 21) Digitalisierungsmittel (11) aufweist zum Digitalisieren des analogen Signals in ein digitales Signal, und Zerlegungsmittel (21) zum Zerlegen des digitalen Signals in das äquivalente analoge Signal, wobei das äquivalente analoge Signal äquivalente analoge Signalkomponenten aufweist, die betreffende Bitgruppen des digitalen Signals darstellen, **dadurch gekennzeichnet, dass** das Übertragungsmedium parallele Übertragungskanäle aufweist zur separaten Übertragung der äquivalenten analogen Signalkomponenten, und dass die Decodieranordnung (77, 78, 79) zum Rekonstruieren des rekonstruierten analogen Signals aus parallel empfangenen äquivalenten analogen Signalkomponenten vorgesehen ist und dass eine erste Bitgruppe der betreffenden Bitgruppen, die eine am wenigsten signifikante Bitgruppe darstellen, heraufskaliert wird und dass eine zweite Bitgruppe der betreffenden Bitgruppen, die eine signifikanteste Bitgruppe darstellen, herunterskaliert wird.

2. Übertragungssystem (1) nach Anspruch 1, wobei zur Kanalausrichtung auf der Seite des Empfängers (5, 6) der Sender (2) einen Mustergenerator (20) aufweist zum Erzeugen eines Ausrichtmusters, das zu bestimmten Zeitpunkten statt des digitalen Signals dem Empfänger (5, 6) zugeführt wird.

3. Übertragungssystem (1) nach Anspruch 2, wobei der Sender (2) weiterhin mit einem Signalpausendetektor versehen ist zum Detektieren von Signalpausen des analogen Quellensignals, und der Sender (2) dazu vorgesehen ist zum Selektieren der bestimmten Zeitpunkte auf Basis eines Modeselektionssignals, das von dem Signalpausendetektor erzeugt wird.

4. Übertragungssystem (1) nach Anspruch 3, wobei der Sender (2) dazu vorgesehen ist, dem Empfänger (5, 6) das Modeselektionssignal zuzuführen, so dass der Empfänger (5, 6) sich selber in eine Quellensignalmode oder in eine Musterausrichtmode bringen kann.

5. Übertragungssystem (1) nach Anspruch 1, 2, 3 oder 4, wobei die Decodieranordnung (77, 78, 79) wenigstens zwei parallel arbeitende Decodiermittel (77, 78) aufweist zum Rekonstruieren betreffender Bitgruppen aus den parallel empfangenen äquivalenten analogen Signalanteilen und Kombinier- und Umwandlungsmittel zum Kombinieren und Rekonstruieren von Bitgruppen und zum Umwandeln der kombinierten rekonstruierten Bitgruppen zu dem rekonstruierten analogen Signal.

6. Übertragungssystem (1) nach einem der Ansprüche 1 bis 5, wobei das analoge Quellensignal ein Stereo-Signal ist und drei parallele Übertragungskanäle verwendet werden zum Transportieren des äquivalenten analogen Signals, wobei ein erster Kanal einen äquivalenten analogen Signalanteil entsprechend einer ersten Bitgruppe eines linken Stereo-Kanals LCH des Stereo-Signals transportiert, wobei ein zweiter Kanal einen äquivalenten analogen Signalanteil entsprechend einer ersten Bitgruppe eines rechten Stereo-Signals RCH transportiert und wobei ein dritter Kanal betreffende äquivalente analoge Signalanteile entsprechend betreffenden zweiten Bitgruppen des linken LCH und rechten RCH Stereo-Kanals transportiert.

7. Übertragungssystem (1) nach einem der Ansprüche 1 bis 6, wobei das Übertragungsmedium drahtlos ist.

8. Sender (2) mit einer Codieranordnung (11, 21) für ein Übertragungssystem (1), wobei diese Codieranordnung (11, 21) Digitalisierungsmittel (11) aufweist zum Digitalisieren eines analogen Signals in ein digitales Signal, und Zerlegungsmittel (21) zum Zerlegen des digitalen Signals in ein äquivalentes analoges Signal, wobei das äquivalente analoge Signal äquivalente analoge Signalanteile aufweist, die betreffende Bitgruppen des digitalen Signals darstellen, **dadurch gekennzeichnet, dass** der Sender (2) Mittel aufweist zur parallelen Übertragung der betreffenden äquivalenten analogen Signalanteile zu einer parallel arbeitenden Decodieranordnung (77, 78, 79), und zwar über ein Übertragungsmedium und dass eine erste Bitgruppe der betreffenden Bitgruppen, die ein am wenigsten signifikante Bitgruppe darstellt, heraufskaliert wird und dass eine zweite Bitgruppe der betreffenden Bitgruppen, die eine signifikanteste Bitgruppe darstellt, herunterskaliert wird.

9. Empfänger (5, 6) mit einer Decodieranordnung (77, 78, 79) für ein Übetragungssystem (1), **dadurch gekennzeichnet, dass** die Decodieranordnung (77, 78, 79) wenigstens zwei parallel arbeitende Decodiermittel (77, 78) aufweist zum Rekonstruieren betreffender Bitgruppen aus parallelen äquivalenten analogen Signalanteilen, empfangen von einem Sender (2) über ein Übetragungsmedium, wobei eine erste Bitgruppe der betreffenden Bitgruppen, die eine am wenigsten signifikante Bitgruppe darstellt, herunterskaliert wird und eine zweite Bitgruppe der betreffenden Bitgruppen, die eine signifikanteste Bitgruppe darstellt, heraufskaliert wird, wobei die äquivalenten analogen Signalanteile ein analoges Quellensignal darstellen, das einer Codieranordnung (11, 21) in dem Sender zugeführt werden soll, und dass die Decodieranordnung (77, 78, 79) Kombinier- und Umwandlungsmittel (79) aufwesit zum Kombinieren der rekonstruierten Bitgruppen und zum Umwandeln der kombinierten rekonstruierten Bitgruppen zu einem rekonstruierten analogen Signal.

10. Übertragungsverfahren zum Übertragen eines äquivalenten analogen Signals in einem Übertragungssystem (1) über ein Übertragungsmedium, wobei dieses Verfahren die nachfolgenden Verfahrensschritte umfasst:
a) das Codieren eines analogen Quellensignals in ein äquivalentes analoges Signal,
b) nach dem Transport das Decodierung des äquivalenten analogen Signals in ein rekonstruiertes analoges Signal,
c) beim Codieren das Bilden eines digitalen Signal aus dem analogen Quellensignal, und das Zerlegen des digitalen Signals in das äquivalente Signal, wobei das äquivalente analoge Signal äquivalente analoge Signalanteile aufweist, die betreffende Bitgruppen des digitalen Signals darstellen,
**dadurch gekennzeichnet, dass**
d) die äquivalenten analogen Signalanteile über betreffende separate Übertragungskanäle zu parallel arbeitenden Decodiermitteln übertragen werden, und
e) das rekonstruierte analoge Signal aus parallel empfangenen äquivalenten analogen Signalanteilen gebildet wird,
f) wobei eine erste Gruppe der betreffenden Bitgruppen, die eine am wenigsten signifikante Bitgruppe darstellt, heraufskaliert wird und dass eine zweite Bitgruppe der betreffenden Bitgruppen, die eine signifikanteste Bitgruppe darstellt, herunterskaliert wird.

## Revendications

1. Système de transmission (1) comprenant un émetteur (2) muni d'un dispositif de codage (11, 21) pour coder un signal de source analogique en un signal analogique équivalent, le système comprenant en outre un récepteur (5, 6) muni d'un dispositif de décodage (77, 78, 79) pour décoder le signal analogique équivalent en un signal analogique reconstruit, et un support de transmission pour acheminer le signal analogique équivalent (3, 4) au récepteur (5, 6), le dispositif de codage (11, 21) comprenant des moyens de numérisation (11) pour numériser le signal analogique en un signal numérique, et des moyens de décomposition (21) pour décomposer le signal numérique en signal analogique équivalent, de sorte que le signal analogique équivalent comprend des composantes de signal analogique équivalent représentant des groupes de bits respectifs du signal numérique, **caractérisé en ce que** le support de transmission comprend des canaux de transmission parallèles pour une transmission séparée des composantes de signal analogique équivalent, et **en ce que** le dispositif de décodage (77, 78, 79) est propre à reconstruire le signal analogique reconstruit à partir des composantes de signal analogique équivalent reçues parallèles et **en ce qu'**un premier groupe de bits des groupes de bits respectifs représentant un groupe de bits de poids le plus faible est à échelle augmentée et **en ce qu'**un deuxième groupe de bits des groupes de bits respectifs représentant un groupe de bits de poids le plus fort est à échelle réduite.

2. Système de transmission (1) suivant la revendication 1, dans lequel, afin de permettre un alignement de canal sur le côté du récepteur (5, 6), l'émetteur (2) comprend un générateur de configuration (20) pour générer une configuration d'alignement qui est acheminée à des instants donnés au récepteur (5, 6) à la place du signal numérique.

3. Système de transmission (1) suivant la revendication 2, dans lequel l'émetteur (2) est en outre muni d'un détecteur de pause de signal pour détecter des pauses de signal du signal de source analogique, et l'émetteur (2) est propre à choisir les instants de temps donnés sur la base d'un signal de sélection de mode généré par le détecteur de pause de signal.

4. Système de transmission (1) suivant la revendication 3, dans lequel l'émetteur (2) est propre à transmettre le signal de sélection de mode au récepteur (5, 6) de sorte que le récepteur (5, 6) peut se régler lui-même sur un mode de décodage de signal de source ou sur un mode d'alignement de configuration.

5. Système de transmission (1) suivant la revendication 1, 2, 3 ou 4, dans lequel le dispositif de décodage (77, 78, 79) comprend au moins deux moyens de décodage fonctionnant en parallèle (77, 78) pour reconstruire des groupes de bits respectifs à partir des composantes de signal analogique équivalent reçues parallèles, et un moyen de combinaison et de conversion pour combiner les groupes de bits reconstruits et pour convertir les groupes de bits reconstruits combinés en signal analogique reconstruit.

6. Système de transmission (1) suivant l'une quelconque des revendications 1 à 5, dans lequel le signal de source analogique est un signal audio stéréo, et trois canaux de transmission parallèles sont utilisés pour acheminer le signal analogique équivalent, un premier canal acheminant une composante de signal analogique équivalent correspondant à un premier groupe de bits d'un canal stéréo gauche LCH du signal stéréo, un deuxième canal acheminant une composante de signal analogique équivalent correspondant à un premier groupe de bits d'un canal stéréo droite RCH et un troisième canal acheminant des composantes de signal analogique équivalent respectives correspondant à des deuxièmes groupes de bits respectifs des canaux stéréo gauche LCH et droite RCH.

7. Système de transmission 1 suivant l'une quelconque des revendications 1 à 6, dans lequel le support de transmission est sans fil.

8. Emetteur (2) muni d'un dispositif de codage (11, 21) pour un système de transmission (1), lequel dispositif de codage (11, 21) comprend un moyen de numérisation (11) pour numériser un signal analogique en un signal numérique, et un moyen de décomposition (21) pour décomposer le signal numérique en un signal analogique équivalent, de sorte que le signal analogique équivalent comprend des composantes de signal analogique équivalent représentant des groupes de bits respectifs du signal numérique, **caractérisé en ce que** l'émetteur (2) comprend un moyen pour la transmission en parallèle des composantes de signal analogique équivalent respectives à un dispositif de décodage fonctionnement en parallèle (77, 78, 79) par le biais d'un support de transmission et **en ce qu'**un premier groupe de bits des groupes de bits respectifs représentant un groupe de bits de poids le plus faible est à échelle augmentée et **en ce qu'**un deuxième groupe de bits des groupes de bits respectifs représentant un groupe de bits de poids le plus fort est à échelle réduite.

9. Récepteur (5, 6) muni d'un dispositif de décodage (77, 78, 79) pour un système de transmission (1), **caractérisé en ce que** le dispositif de décodage (77, 78, 79) comprend au moins deux moyens de décodage fonctionnant en parallèle (77, 78) pour reconstruire des groupes de bits respectifs à partir de composantes de signal analogique équivalent parallèles reçues d'un émetteur (2) par le biais d'un support de transmission où un premier groupe de bits des groupes de bits respectifs représentant un groupe de bits de poids le plus faible est à échelle réduite et un deuxième groupe de bits des groupes de bits respectifs représentant un groupe de bits de poids le plus fort est à échelle augmentée, de sorte que les composantes de signal analogique équivalent représentent un signal de source analogique à appliquer à un dispositif de codage (11, 21) dans l'émetteur, et **en ce que** le dispositif de décodage (77, 78, 79) comprend des moyens (79) de combinaison et de conversion pour combiner les groupes de bits reconstruits et pour convertir les groupes de bits reconstruits combinés en un signal analogique reconstruit.

10. Procédé de transmission pour transmettre un signal analogique équivalent dans un système de transmission (1) par le biais d'un support de transmission, le procédé comprenant les étapes suivantes :
a) codage d'un signal de source analogique en un signal analogique équivalent ;
b) après acheminement, décodage du signal analogique équivalent en un signal analogique reconstruit ;
c) lors du codage, formation d'un signal numérique à partir du signal de source analogique et décomposition du signal numérique en signal équivalent, de sorte que le signal analogique équivalent comprend des composantes de signal analogique équivalent représentant des groupes de bits respectifs du signal numérique ;
**caractérisé en ce que**
d) les composantes de signal analogique équivalent sont transmises à un moyen de décodage fonctionnant en parallèle par le biais de canaux de transmission séparés respectifs ;
e) le signal analogique reconstruit est formé à partir de composantes de signal analogique équivalent reçues parallèles, et
f) un premier groupe de bits des groupes de bits respectifs représentant un groupe de bits de poids le plus faible est à échelle augmentée et un deuxième groupe de bits des groupes de bits respectifs représentant un groupe de bits de poids le plus fort est à échelle réduite.
